# EUROPÄISCHE PATENTSCHRIFT

(11) **EP 2 837 960 B1**
(45) Veröffentlichungstag und Bekanntmachung des Hinweises auf die Patenterteilung: **09.10.2019**
(21) Anmeldenummer: 14002833.3
(22) Anmeldetag: 14.08.2014
(51) Int. Cl.: G02B 7/12, G02B 23/18

(54) **Fernoptisches Gerät**
Long range optical device
Instrument de télé-optique

(30) Priorität: 15.08.2013 DE 102013013480
(43) Veröffentlichungstag der Anmeldung: 18.02.2015
(73) Patentinhaber: Carl Zeiss AG, 73447 Oberkochen (DE)
(72) Erfinder: Luthardt, Dirk, 35581 Wetzlar (DE)
(74) Vertreter: Herden, Andreas F.

(56) Entgegenhaltungen:
- WO-A1-2014/108429
- AT-B- 349 785
- DE-A1- 2 533 362
- DE-U1- 29 810 161
- GB-A- 1 427 004
- US-A- 5 103 248

## Beschreibung

Die Erfindung betrifft ein fernoptisches Gerät, insbesondere ein Binokular mit zwei Tuben zur Aufnahme fernoptischer Einrichtungen und verschwenkbar zwischen den Tuben des fernoptischen Geräts angeordneten Knickbrücken, wobei die Knickbrücken zumindest jeweils ein erstes und ein zweites einander zugeordnetes, relativ zueinander verschwenkbares Brückenelement umfassen.

Ein Fernglas ist in der Regel ein fernoptisches Gerät, mit dem man Gegenstände mit einer bestimmten Vergrößerung betrachten kann. Dabei sind bei binokularen Ferngläsern die betrachteten Objekte mit beiden Augen durch getrennte optische Strahlengänge zu erkennen, die in jeweils verschiedenen Gehäuseteilen, den Tuben, bereitgestellt werden. Die beiden optischen Strahlengänge sollen dazu exakt parallel zueinander justiert sein und vorzugsweise innerhalb einer Winkelabweichung von nicht mehr als 10' für jede Augenweite liegen.

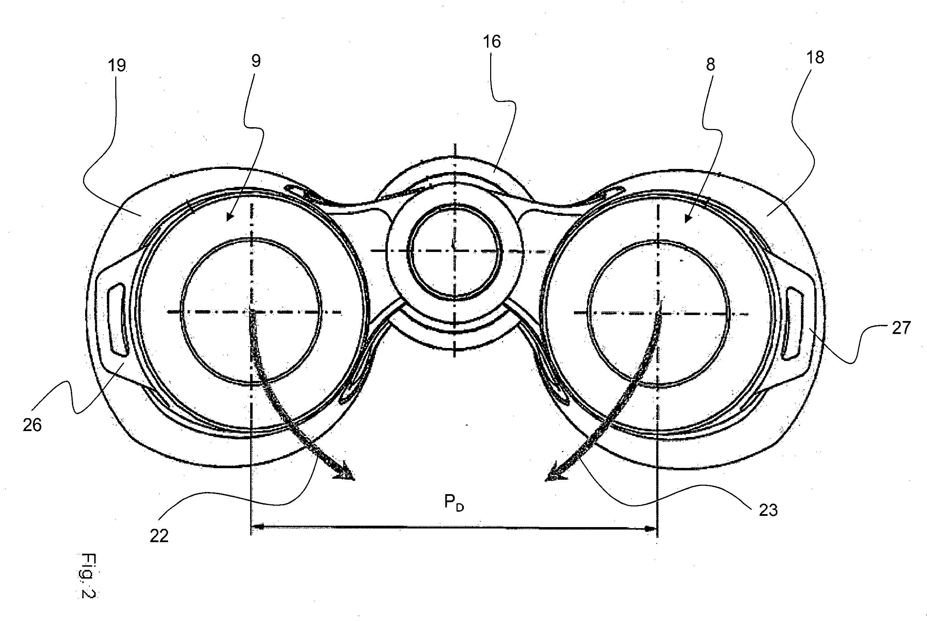

Zum Anpassen eines Binokulars an den Augenabstand eines jeweiligen Benutzers werden im Allgemeinen die beiden Tuben, welche über Knickbrücken miteinander verbunden sind, über eine gemeinsame mechanische Achse, welche eine Gelenkachse bildet, geknickt. Dadurch kann ein Benutzer das Fernglas individuell an seine Augenweite, welche auch als Pupillendistanz P_{D} bezeichnet wird, anpassen, siehe beispielsweise hierzu Figur 2 der beigeschlossenen Zeichnungen.

Die Knickbrücken eines Binokulars wirken in der Regel wie ein Scharnier. Bei einem Brückenelement ist die Gelenk- oder Schwenkachse des Fernglases (Knickachse) bereits eindeutig über die Scharnierachse des einen Brückenelementes bestimmt. Bei zwei Brückenelementen ergibt sich die Knickachse aus der gemeinsamen, gemittelten Achse der beiden Scharnierachsen der zwei Brückenelemente. Das bedeutet, dass die Scharnierachsen der zwei Brückenelemente sehr genau fluchten müssen, wenn eine einwandfreie Knickbewegung ohne ungewollte Reibungs- oder Verformungskräfte ermöglicht werden soll. Andernfalls kann sogar ein Festklemmen beim Knicken stattfinden. Bei mehr als zwei Brückenelementen wird dieses Problem noch deutlich verstärkt.

Um bei drei Brückenelementen die drei Scharnierachsen fluchten zu lassen, damit sich eine gemeinsame Knickachse ergibt, welche die eingestellte binokulare Justierung der beiden optischen Strahlengänge beim Knicken gewährleistet, sind sehr hohe Genauigkeiten an die Fertigung der Brückenelemente erforderlich. Dies führt zu hohem Aufwand in der Herstellung von derartigen Ferngläsern mit mehr als zwei Knickbrücken. Die geforderten augenseitigen 10' der axialen binokularen Justierung müssen jeweils an allen mechanischen Schnittstellen der einzelnen Brückenelemente realisiert werden. Ist die Justierung nicht innerhalb der geforderten augenseitigen 10' Parallelität, ist die Gebrauchsfähigkeit des Fernglases nicht gegeben oder kann zumindest stark vermindert sein.

Dies gilt vor allem auch, wenn das Fernglas mechanischen und klimatischen Beanspruchungen ausgesetzt wird, die für ein Outdoorgerät, beispielsweise im jagdlichen Bereich üblich sind. Das führt dazu, dass die Auslegung der Brückenelemente so stabil sein muss, dass über die Lebensdauer des Produktes die fabrikmäßig eingestellte binokulare Justierung nicht mehr beeinträchtigt wird und verlangt hohe mechanische Festigkeiten bei der Konstruktion des binokularen Fernglases.

Ein einziges Brückenelement kann aufgrund mangelnder Stabilität dazu ungeeignet sein und folglich werden in der Praxis im Allgemeinen zumindest zwei Brückenelemente realisiert.

Je weiter die beiden Brückenelemente axial voneinander beabstandet angeordnet sind, umso stabiler ist die Knickbrücke des Fernglases und um so robuster ist das Produkt in Bezug auf die Einhaltung der geforderten binokularen Justierung.

Bei einem dritten Brückenelement in der Mitte wirkt dessen zusätzliche Scharnierachse in dessen Knickachse auf die Stabilität mit ein. Die Knickachse des Fernglases ist dadurch überbestimmt (drei Scharnierachsen), wodurch auf die Fertigung wesentlich höhere Genauigkeitsforderungen zukommen als bei nur zwei Knickachsen.

In DE 2 316 955 wird ein Doppelfernrohr mit einstellbarem Gebrauchs- und Verpackungszustand und gemeinsamer Fokussierung beider Einzelfernrohre gezeigt, bei welchem zwei schwenkbare Brücken zwischen den Einzelfernrohren angeordnet, sind. Zwischen den schwenkbaren Brücken oder in einer der schwenkbaren Brücken ist ein axial verschiebbares Element angeordnet mit welchem sich das Doppelfernrohr fokussieren lässt.

Ferner offenbart die Patentschrift US 5,103,248 A ein binokulares Fernglas mit drei Knickbrücken. Auch hier ist zwischen den schwenkbaren Brücken eine Einrichtung zur Fokussierung des Fernglases angeordnet. Die Knick- bzw. Verbindungsbrücken sind dabei so ausgebildet, dass eine mechanische Kraftübertragung entweder direkt oder durch mechanische Verbindung mittels einer Unterlegscheibe erfolgt.

Die Offenlegungsschrift DE 25 33 362 A1 offenbart ein binokulares Fernglas, bei welchen an den Tuben zur Aufnahme der optischen Systeme Ansätze gebildet sind, welche zur Aufnahme eines Kugelagers dienen, so dass die beiden Tuben gegeneinander verschwenkbar sind. Hierbei erfolgt die mechanische Kraftübertragung durch eine Kugel als Verbindungselement.

GB 1 427 004 A offenbart ein weiteres binokulares Fernglas, bei welchen zwei Tuben, die zur Aufnahme der optischen Systeme dienen, über Verbindungseinheiten, welche getrennt voneinander vorliegen über ein Kugelgelenk drehbar gelagert sind. Die mechanische Kraftübertragung erfolgt über ein Kugelgelenk.

AT 349 785 B ist ein binokulares Fernglas zu entnehmen, welches durch eine spezielle Ausgestaltung der die beiden Tuben verbindenden Knickbrücke über einen gezielt einstellbaren Gebrauchs- und Verpackungszustand verfügt. Auch bei dem Gegenstand dieser Schrift kommt es zu einer mechanischen Kraftübertragung zwischen den einzelnen die Knickbrücke bildenden Elementen.

Der Erfindung liegt die Aufgabe zu Grunde, diese hohen Anforderungen eines Binokulars mit mehr als zwei Knickbrücken an die Fertigungstoleranzen zu mildern.

Darüber hinaus wäre es vorteilhaft, wenn durch zumindest eine weitere, dritte Knickbrücke die Stabilität des Binokulars weiter gefördert und dessen Robustheit gesteigert wird.

Diese Aufgabe wird mit einem fernoptischen Gerät nach Anspruch 1 gelöst, insbesondere einem Binokular, mit zwei Tuben zur Aufnahme fernoptischer Einrichtungen, einer ersten Knickbrücke, einer zweiten Knickbrücke und vorzugsweise einer dritten Knickbrücke, welche verschwenkbar zwischen den Tuben des fernoptischen Geräts angeordnet sind, wobei die Knickbrücken jeweils zumindest ein erstes und ein zweites einander zugeordnetes, relativ zueinander verschwenkbares Brückenelement umfassen, bei welchem zumindest eine Knickbrücke eine Passung aufweist, welche zumindest in Bereichen des Verschwenkbereichs der Brückenelemente ohne äußere Krafteinwirkung einen mechanischen Kontakt der Brückenelemente an einander verhindert.

Hierdurch wird ein Spalt zwischen den Brückenelementen dieser zumindest einen Knickbrücke definiert, welcher eine wesentlich einfachere Fertigung dieser Knickbrücke ermöglicht, da die für diesen Spalt nötigen Toleranzen weit unkritischer ausgewählt werden können als es für die beiden weiteren, die erste und die zweite Knickbrücke des Binokulars nötig ist. Eine Überbestimmung der Knick- oder Schwenkachsen durch die zumindest eine weitere Knickbrücke kann somit vermieden werden.

Wenn diese Passung einen konstanten Abstand der Brückenelemente, insbesondere auch während des Verschwenkens der Brückenelemente, relativ zueinander definiert, kann hierdurch eine Reibung während des Knickens oder Verschwenkens über den gesamten Knick- oder Verschwenkbereich vermieden werden.

Bei den verschiedenen Ausführungsformen der Erfindung liegt der Abstand der Brückenelemente fertigungstechnisch günstig im Bereich von 0,001 mm bis 1,5 mm, vorzugsweise in einem Bereich von 0,01 mm bis 1,3 mm und am bevorzugtesten in einem Bereich von 0,1 mm bis 1,1 mm.

Wenn bei der Passung ohne weitere, über das eigene Gewicht des fernoptischen Geräts hinausgehender mechanischer Belastung ein Abstand zwischen den Brückenelementen dieser Knickbrücke definiert ist, welcher bei Knicken oder Verschwenkung dieser Brückenelemente relativ zueinander im Wesentlichen keine Reibungskräfte zwischen diesen Brückenelementen entstehen lässt und nur bei stärkeren Krafteinwirkungen ein mechanischer Kontakt zwischen den Brückenelementen entstehen kann, kann dem Binokular hierdurch weitere Festigkeit gegeben werden.

Hierdurch wird ein materialsparenderer Aufbau des Binokulars und somit bei im Wesentlichen gleicher Festigkeit eine Gewichts- und Kostenreduktion ermöglicht. Trotzdem kann dabei auch die Schlag- und Stoßfestigkeit erhöht sein, da zunächst bei mechanischer Belastung eine zumindest teilweise elastische Verformung auftreten kann und die Kräfte beim mechanischen Kontakt der Brückenelemente der Knickbrücke verminderte Wirkung entfalten.

Durch entsprechende Dimensionierung der Passung zwischen den Brückenelementen kann der Grad an zulässiger äußerer Krafteinwirkung festgelegt werden, bis zu welchem die Passung elastische Verformungen aufnehmen kann und somit die maximal erlaubte elastische Verformung der Tuben relativ zueinander möglich ist, bevor ein mechanischer Kontakt zwischen den Brückenelementen oder eine Anlage der Brückenelemente aneinander entsteht.

Es ist bei derartigen Ausgestaltungen auch die Verwendung von Kunststoff oder Faserverbundmaterialien für die Tuben und die Brückenelemente der Knickbrücken des Binokulars möglich, wie beispielsweise die Verwendung von Glas- und Kohlefaserverbundwerkstoffen.

Vorteilhaft kann zwischen den Brückenelementen der Knickbrücke ein zumindest teilweise reversibel verformbarer Abstandshalter bzw. Spacer angeordnet sein. Dieser kann Kräfte zwischen den Brückenelementen der Knickbrücke und durch seine Verformung weitere Energie aufnehmen, welche , insbesondere bei ungewollter externer Krafteinwirkung nicht mehr zur Schädigung des fernoptischen Geräts zur Verfügung steht.

Darüber hinaus kann dieser Abstandshalter definierte Reibkräfte erzeugen, welche einer ungewollten Verstellung der Knickbrücke während des Gebrauchs des Binokulars entgegenwirken.

Dieser Abstandshalter umfasst vorteilhaft, einen Elastomer, insbesondere einen synthetischen Kautschuk oder ein Poren umfassendes Gebilde.

Wenn die Brückenelemente der zumindest einen Knickbrücke eine sich über den Verschwenkweg radial ändernde Abmessung aufweisen und ein von der Schwenkstellung abhängiges Spiel zwischen den Brückenelementen definieren, kann da bei dieser Ausführungsform das Spiel nicht mehr konstant über den gesamten Verschwenkweg ist, hierdurch beispielsweise bei einer einer Transportposition entsprechenden Schwenkstellung eine besonderst stabile und sehr stoßfeste Anordnung des fernoptischen Geräts geschaffen werden, in welcher die Brückenelemente an einander anliegen können und das Binokular besonders sicher transportiert werden kann.

Hierzu kann sogar ein etwa zwischen den Brückenelementen angeordnetes Elastomer vorzugsweise definiert so verpresst werden, dass eine definierte mechanische Vorspannung erzeugt wird, welche externen Verformungskräften entgegenwirkt und dem Benutzer eine taktile Rückkopplung bereitstellt, dass sich das fernoptische Gerät in dessen Transportstellung befindet.

Wenn die Brückenelemente der zumindest einen Knickbrücke eine sich in axialer Richtung radial ändernde, ineinander greifende Struktur aufweisen, können bei axialen Belastungen Kräfte zwischen den Tuben, welche über einen durch Dimensionierung der Passung festlegbaren Wert hinausgehen zwischen den Brückenelementen der zumindest einen Knickbrücke aufgenommen werden und kann diese zur Erhöhung der axialen Stabilität des Binokulars beitragen.

Wenn die zumindest eine Knickbrücke die zweite Knickbrücke, welche axial zwischen der ersten und zweiten Knickbrücke angeordnet ist, umfasst, kann eine hohe Präzision durch die entfernt liegende erste und dritte Knickbrücke bereitgestellt werden und die mittlere Knickbrücke zur erhöhten Stabilität beitragen.

Bei einer Ausführungsform, bei welcher die zumindest eine Knickbrücke die erste und die dritte Knickbrücke umfasst, wobei die erste Knickbrücke axial vor der zweiten Knickbrücke und die dritte Knickbrücke axial hinter der zweiten Knickbrücke angeordnet ist, kann eine sehr günstige Fertigung ermöglicht werden, da nur noch die mittlere Knickbrücke eine sehr genau definierte Passung aufweisen muss, während die beiden anderen Knickbrücken bei stark verminderten Fertigungskosten für viele Fälle noch ausreichende Stabilität bereitstellen können.

Die Erfindung wird nachfolgend unter Bezugnahme auf die beigeschlossenen Zeichnungen anhand bevorzugter Ausführungsformen beschrieben.

Es zeigen:
- Figur 1: eine teilweise Querschnittsdarstellung einer ersten erfindungsgemäßen Ausführungsform, welche in etwa in der Ebene der optische Achsen des Binokulars angeordnet ist,
- Figur 2: eine Aufsicht auf das Binokular in dessen Transportstellung von der Okularseite her gesehen,
- Figur 3: eine schematische Ansicht eines Binokulars mit zwei Knickbrücken,
- Figur 4: eine schematische Ansicht eines Binokulars mit drei Knickbrücken,
- Figur 5: eine schematische Ansicht eines Binokulars mit zwei Knickbrücken in teilweise zerlegtem Zustand mit einer Detailansicht des Aufbaus einer herkömmlichen Knickbrücke,
- Figur 6: eine schematische Ansicht eines Binokulars mit drei Knickbrücken in teilweise zerlegtem Zustand mit einer Detailansicht des Aufbaus einer erfindungsgemäßen Knickbrücke,
- Figur 7: eine Detailansicht der Brückenelemente einer weiteren Ausführungsform der erfindungsgemäßen Knickbrücke,
- Figur 8: eine Detailansicht der Brückenelemente einer nochmals weiteren Ausführungsform der erfindungsgemäßen Knickbrücke.

Im Rahmen der Beschreibung und Offenbarung der Erfindung werden um der Einfachheit und Klarheit willen die nachfolgenden Definitionen vorgenommen.

### Definitionen

Ohne weitere Angaben bezieht sich der Ausdruck "axial" stets auf die Schwenkachse der Knickbrücken. In axialer Richtung "nach vorn" bedeutet in der vom Benutzer wegweisenden Richtung, somit in Richtung der Beobachtung bei Benutzung des fernoptischen Geräts. Ein erstes Element ist somit "hinter" einem anderen zweiten Element angeordnet, falls das erste Element in axialer Richtung weiter vorn als das zweite Element angeordnet ist.

Ohne weitere Angaben bezieht sich der Ausdruck "lateral" stets auf eine Richtung, die senkrecht zur Schwenkachse der Knickbrücken verläuft.

Der Begriff des "Tubus" beschreibt eine in der Regel röhrenförmige Anordnung, innerhalb welcher sich optische Einrichtungen, insbesondere optisch abbildende oder bildgebende Einrichtungen befinden und ist nicht auf zylindersymmetrische Gebilde beschränkt. So kann es aus Gründen der Ergonomie sinnvoll sein, das Äußere des Tubus in einer an die Handhabung des Benutzers angepassten Form zu gestalten. Ferner kann es vorteilhaft sein, das Innere des Tubus nicht zylindersymmetrisch oder mit Ausnehmungen auszubilden, um mechanische Triebe für optische Elemente zu beherbergen oder diesen den Eingriff in den Tubus zu gestatten. Auch Tuben mit axial versetzten Abschnitten können vorteilhaft zur Aufnahme von beispielsweise durch Spiegelsysteme versetzten Strahlengängen sein.

Bei der nachfolgenden Beschreibung sollen gleiche Bezugszeichen in den verschiedenen Ausführungsformen der Erfindung jeweils gleiche Elemente und insbesondere gleiche Funktionen und damit einhergehende Wirkungen bezeichnen. Generell ist die Erfindung auf binokulare Ferngläser anwendbar. Ferner können bei erfindungsgemäßen binokularen Ferngläsern auch zwischen den Tuben, insbesondere im Bereich der Knickbrücken weitere Elemente, wie beispielsweise entfernungsmessende oder digitale bildgebende Einrichtungen angeordnet sein, welche beispielsweise im Bereich der Lageraugen mit eigenen Gehäuse- oder Befestigungseinrichtungen gehalten und um der Einfachheit willen in den Zeichnungen nicht dargestellt, jedoch dem Fachmann wohlbekannt sind.

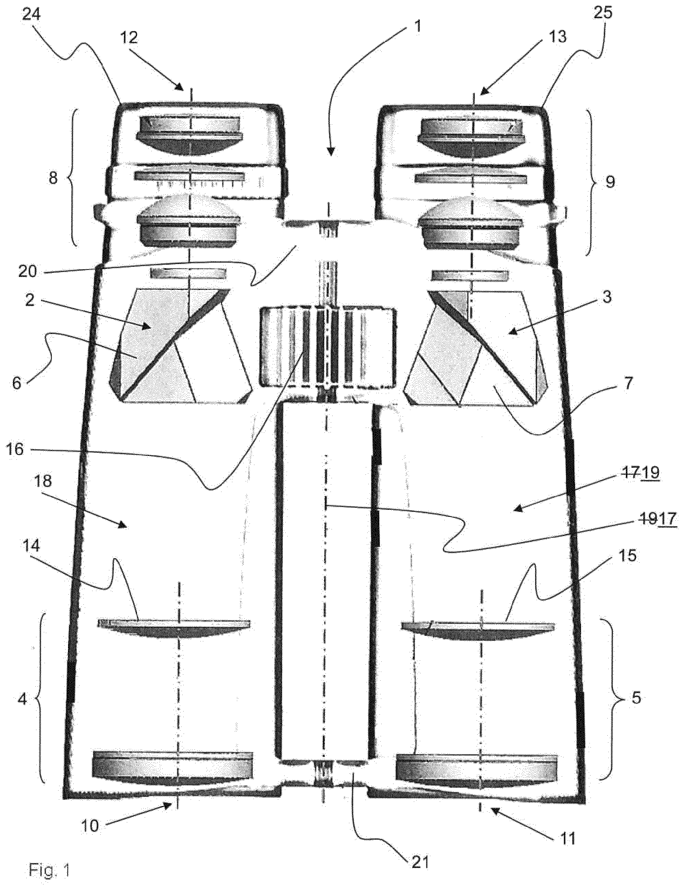

Ein in Figur 1 beispielhaft im Gesamten mit dem Bezugszeichen 1 versehenes binokulares Fernglas 1, in welchem die Erfindung verwirklicht werden kann, umfasst zwei parallel zueinander angeordnete Tuben, die jeweils ein optisches System 2, 3 enthalten.

Das optische System 2, 3 umfasst jeweils vorzugsweise mindestens einen Objektiv 4, 5, eine dem Fachmann bekannte und in Figur 1 nicht dargestellte Aperturblende, ein Prismensystem 6, 7 und ein Okular 8, 9.

Durch das Objektiv 4, 5 und durch das Okular 8, 9 wird jeweils eine optische Achse 10, 11 und 12, 13 festgelegt.

Das Objektiv 4, 5 kann mehrere einzelne Linsen oder Kittgliedern umfassen.

Zum Zwecke einer Fokussierung eines durch das binokulare Fernglas betrachteten und in der Regel entfernt liegenden Objekts kann entweder das Okular 8, 9 axial verschoben werden, oder das komplette Objektiv 4, 5 kann axial verschoben werden, oder eine Linsengruppe 14, 15, die Bestandteil des Objektivs 4, 5 sein kann, kann axial verschoben werden. Diese Linsengruppe ist in der Regel jeweils zwischen weiteren Linsen des Objektivs 4, 5 und dem Prismensystem 6, 7 angeordnet und kann Fokussierlinse genannt werden.

Zum Fokussieren ist ein Drehknopf 16 auf einer Mittellinie 17 angeordnet, mit dem die Fokussierlinsen 14, 15 gemeinsam axial verschoben werden können.

Das Objektiv 4, 5 kann ein reales, relativ zum betrachteten Objekt auf dem Kopf stehendes Bild in einer dem Objektiv zugeordneten Bildebene erzeugen. Zum Zwecke der Bildaufrichtung kann das Prismensystem 6, 7 nach Abbe-König, Schmidt-Pechan, Uppendahl, Porro oder einer anderen Prismensystem-Variante aufgebaut sein. Durch das Prismensystem 6, 7 wird das auf dem Kopf stehende Bild wieder aufgerichtet.

In der Zwischenbildebene kann sich eine das Sehfeld scharf begrenzende Feldblende befinden.

Das Okular 8, 9 kann dazu benutzt werden, das Bild der Zwischenbildebene in eine beliebige Entfernung, z.B. ins Unendliche oder in einem Meter scheinbare Entfernung, abzubilden.

Eine *Strahlrichtung* kann durch die Reihenfolge Objekt - Objektiv - Prismensystem - Okular - Auge definiert werden. Die optische Achse des Objektivs 10, 11 kann durch einen *Strahlversatz* aufgrund des Prismensystems zur optischen Achse des Okulars 8, 9 einen lateralen Versatz aufweisen.

Die Tuben 18, 19 sind entweder über zumindest eine zweiteilige Brücke mit der Mittellinie als Schwenkachse miteinander verbunden, oder sind fest zueinander in einem gemeinsamen Gehäuse angeordnet.

Der Augenabstand eines Benutzers kann bei Vorhandensein der mindestens einen zweiteiligen Knickbrücke 20, 21 durch eine Knickung oder Verschwenkung der Brücke 20, 21 berücksichtigt werden, welches in Figur 2 mit den Pfeilen 22 und 23 beispielhaft dargestellt ist.

Die Aperturblende kann entweder durch eine Fassung eines optischen Elements gebildet sein oder durch eine separate Blende definiert sein. Sie kann durch das in Strahlrichtung nachfolgende restliche optische System in eine Ebene abgebildet werden, die in Strahlrichtung hinter dem Okular liegt und typischerweise 5 bis 25 mm Abstand zu diesem hat.

Diese Ebene kann *Ebene der Austrittspupille* genannt werden. Eine Fehlsichtigkeit des Benutzers kann mittels eines *Dioptrienausgleichs* berücksichtigt werden. Dazu können z.B. die relativen axialen Positionen der Fokussierlinsen 14, 15 der beiden Tuben zueinander vom Benutzer verstellbar sein.

Eine andere Möglichkeit besteht darin, die relativen axialen Positionen der Okulare 8, 9 zueinander verändern zu können.

Zum Schutz des Benutzers vor seitlich einfallendem Licht und zur Herstellung des optimalen Abstands des Auges zum Okular können an der Okularen ausziehbare, ausdrehbare oder umklappbare *Augenmuscheln* 24, 25 vorgesehen sein.

Ein binokulares Fernglas kann darüber hinaus weitere optische Komponenten enthalten, die z.B. einer Bildstabilisierung, einer Strahlein- oder -auskopplung oder fotografischen Zwecken dienen.

Ebenso können elektronische Komponenten, Bedienelemente oder Energiespeicher vorhanden sein, die für die genannten Zwecke nötig oder hilfreich sind.

Meistens seitlich am binokularen Fernglas können sich Haltevorrichtungen 26, 27 befinden, an denen z.B. ein Gurt zum Tragen befestigt werden kann.

Für die korrekte Funktionsweise des binokularen Fernglases 1 beziehungsweise Binokulars 1 ist es notwendig, dass die eingestellte, sehr exakte Justierung der beiden optischen Strahlengänge und somit deren optische Achsen 10 und 12 relativ zu den optischen Achsen 11 und 13 beim Knicken des Fernglases beibehalten wird.

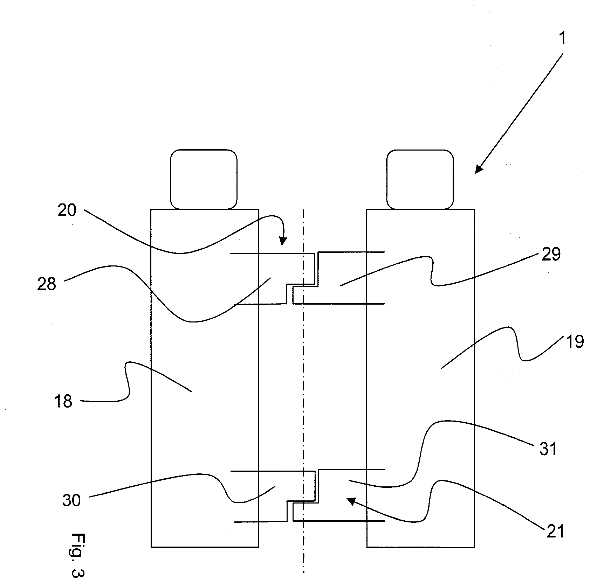

Hierfür ist es vorteilhaft, wenn die Knickbrücken 20, 21 mit deren jeweiligen Brückenelementen 28, 29 und 30, 31 weit auseinander liegen, um so eine stabile Basis für die für die Verschwenkung oder Knickung wirksame mechanische Achse zu bilden, siehe hierzu insbesondere die schematische Darstellung der Figur 3.

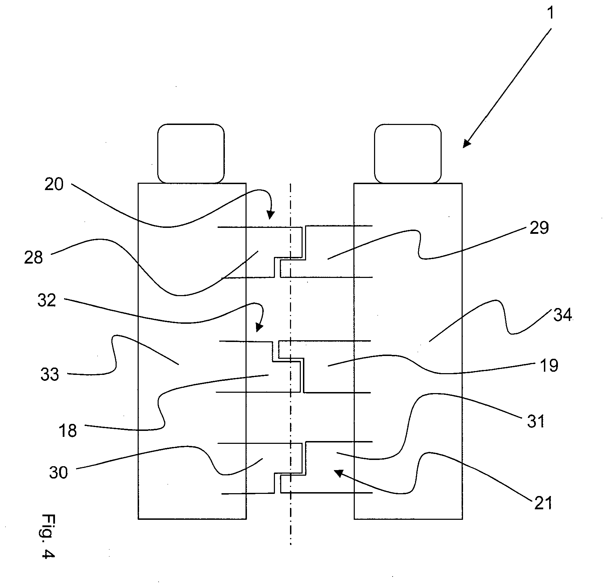

Aus der schematischen Darstellung der Figur 4 ist ein binokulares Fernglas 1 mit drei Knickbrücken 20, 21 und 32 zu erkennen, bei welchen die Knickbrücke 32 Brückenelemente 33 und 34 aufweist.

In den deutschen Patentanmeldungen 10 2012 009 990 und 10 2012 025 614 sind weitere Vorteile beschrieben, wenn das binokulare Fernglas 1 drei Brückenelementen aufweist. Diese deutschen Patentanmeldungen 10 2012 009 990 und 10 2012 025 614 werden durch Bezugnahme vollumfänglich auch zum Gegenstand der vorliegenden Erfindung und insbesondere auch zu einem Teil der Offenbarung der vorliegenden Beschreibung gemacht.

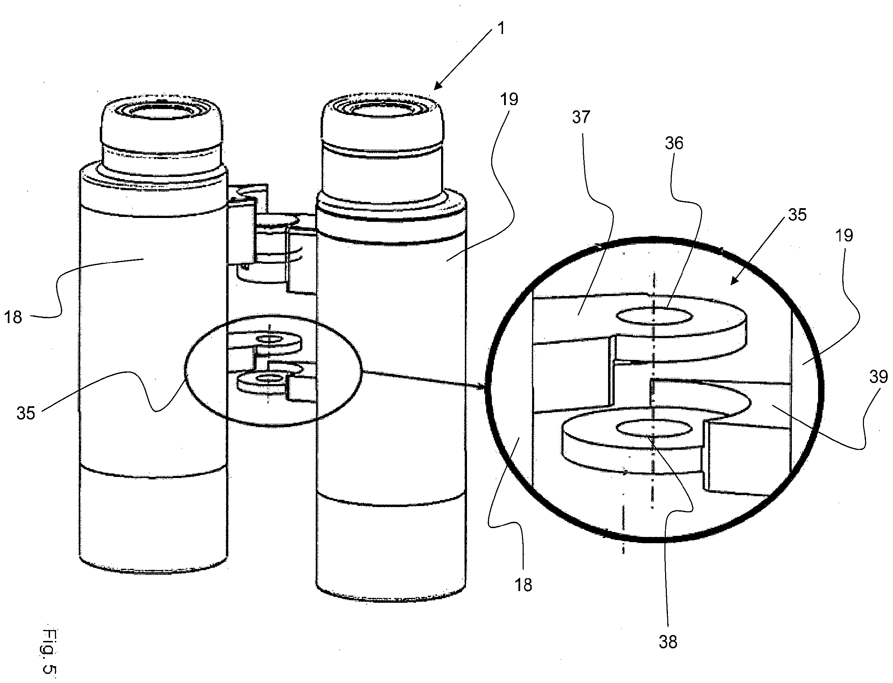

Der in Figur 5 beispielhaft gezeigte Aufbau einer herkömmlichen Knickbrücke 35 umfasst ein oberes Gelenkauge 36, das in einem Brückenelement 37 ausgebildet ist, welches am Tubus 18 angeordnet ist und ein unteres Gelenkauge 38, welches in einem Brückenelement 39 ausgebildet ist, das am Tubus 19 angeordnet ist.

Die Gelenkaugen 36 und 38 sind dazu ausgebildet, im montierten Zustand des Binokulars 1 wechselseitig ineinander zu greifen. Beide Gelenkaugen haben je eine Bohrung, die im Zusammenbau koaxial angeordnet und mit einem in den Figuren nicht dargestellten, dem Fachmann jedoch bekannten Bolzen oder einer Hülse verschwenkbar aneinander gehalten sind, wodurch sich eine gemeinsame Scharnierachse des Brückenelements ergibt.

Bei den verschiedenen Ausführungsformen der Erfindung werden zumindest teilweise, dies bedeutet soweit nicht anders dargestellt, auch herkömmliche Knickbrücken verwendet, welche wie die Knickbrücke 35 ausgestaltet sein können.

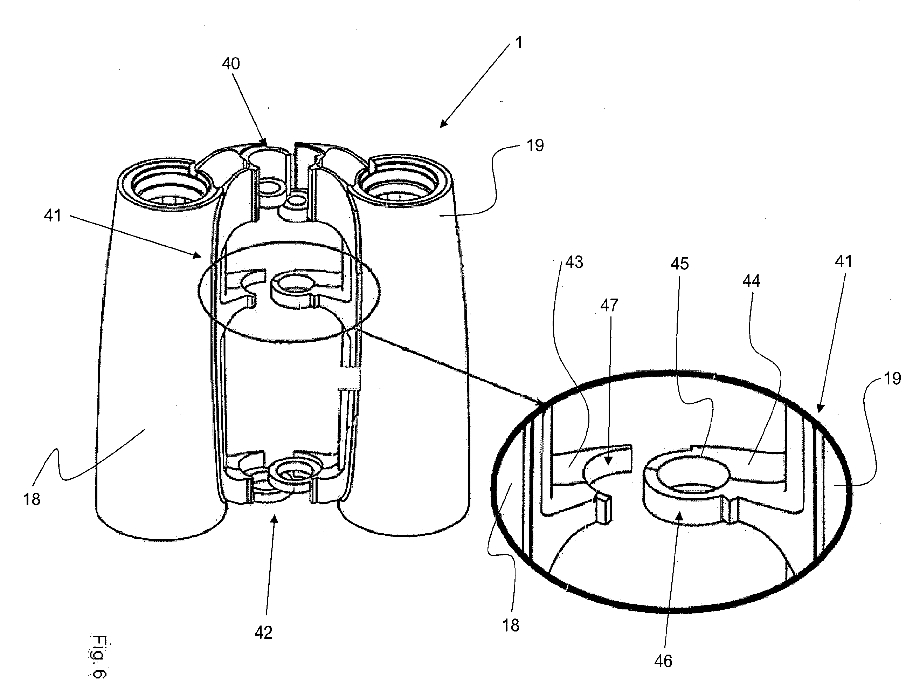

Bei der nachfolgenden Beschreibung einer erfindungsgemäßen Knickbrücke wird unter Bezugnahme auf Figur 6 bei einem Binokular 1 mit drei Knickbrücken, einer ersten Knickbrücke 40, einer zweiten Knickbrücke 41 und einer dritten Knickbrücke 42 zumindest eine dieser Knickbrücken als erfindungsgemäß ausgestaltet beschrieben.

Diese zumindest eine Knickbrücke ist bei der in Figur 6 dargestellten ersten bevorzugten Ausführungsform die zweite Knickbrücke 41, welche axial, dies bedeutet in Richtung der Mittellinie des Binokulars 1, zwischen der ersten und zweiten Knickbrücke 40, 42 angeordnet ist.

Bei einer weiteren, zweiten bevorzugten Ausführungsform kann die zweite Knickbrücke 42 in herkömmlicher Weise ausgebildet sein und können die erste Knickbrücke 40 und zweite Knickbrücke 41 in erfindungsgemäßer Weise, dies bedeutet wie nachfolgend für die Knickbrücke 40 der ersten bevorzugten Ausführungsform beschrieben ausgebildet sein, so dass die erfindungsgemäße zumindest eine Knickbrücke die erste und die dritte Knickbrücke 40, 42 umfasst, wobei die erste Knickbrücke 40 axial vor der zweiten Knickbrücke 41 und die dritte Knickbrücke 42 axial hinter der zweiten Knickbrücke 41 angeordnet ist.

Nachfolgend wird auf die Detailansicht der Figur 6 Bezug genommen.

Die zumindest eine erfindungsgemäße Knickbrücke, welche in dieser Ausführungsform die Knickbrücke 41 ist, umfasst ein erstes Brückenelement 43, welches am Tubus 18 angeordnet ist und ein zweites Brückenelement 44, welches am Tubus 19 angeordnet ist.

Gemäß der Erfindung wird auf ein Gelenkauge mit enger beziehungsweise spielfreier Passung an einer Gehäusehälfte zumindest in einem Bereich der Knickung oder Verschwenkung der Knickbrücke 41 verzichtet.

Das Brückenelement 43 ist offen gestaltet und wirkt zusammen mit dem Brückenelement 44 zumindest in Teilen des Knick- oder Verschwenkbereichs nicht als Scharnier.

Das Brückenelement 44 am Tubus 19 kann komplett geschlossen ausgebildet sein.

Das Brückenelement 43 am Tubus 18 ist offen gestaltet und umfasst im Zusammenbau das Gelenkauge 45 des Brückenelements 44.

Dabei sind bei der ersten bevorzugten Ausführungsform die Abmaße der Brückenelemente 43, 44 so gewählt, dass zwischen dem äußeren Umfang 46 des Gelenkauges 45 und dem offenen Umfang 47 des Brückenelements 43 zumindest während eines Teils der Verschwenkung ein Spalt entsteht. Dies kann beispielsweise durch die jeweiligen Durchmesser der Umfänge 46 und 47 der Brückenelemente 43 und 44 realisiert werden.

Ohne Beschränkung der Erfindung kann der Umfang 46 des Gelenkauges 45 einen Durchmesser von 20 mm und der offene Umfang 47 des Brückenelements einen Durchmesser von 22 mm aufweisen.

So ergibt sich zwischen den Brückenelementen 43 und 44 ein Spalt von 1 mm im montierten Zustand des Binokulars 1, welcher für die Passung zwischen diesen Brückenelementen 43, 44 einen konstanten Abstand der Brückenelemente, insbesondere auch während des Verschwenkens der Brückenelemente, relativ zueinander definiert.

Dieser Abstand zwischen den Brückenelementen 43, 44, welcher auch als Spiel der Passung zwischen den Brückenelementen 43, 44 bezeichnet wird, kann im Bereich von 0,001 mm bis 1,5 mm, vorzugsweise in einem Bereich von 0,01 mm bis 1,3 mm und am bevorzugtesten in einem Bereich von 0,1 mm bis 1,1 mm liegen und kann zumindest in Bereichen des Knick- oder Verschwenkbereichs der Brückenelemente 43, 44 ohne äußere Krafteinwirkung einen mechanischen Kontakt der Brückenelemente 43, 44 an einander verhindern.

Die Tuben 18, 19 und/oder die Brückenelemente 28 bis 31, 33, 34, 37, 43, 44 der Knickbrücken 40, 41, 42 können aus einem metallischen Werkstoff, wie beispielsweise einer Aluminiumlegierung hergestellt sein.

Alternativ können die Tuben 18, 19 und/oder die Brückenelemente 28 bis 31, 33, 34, 37, 43, 44 der Knickbrücken 40, 41, 42 oder Teile von diesen, beispielsweise im Bereich der Gelenkaugen 36, 39, 45 und des offenen Umfangs 47, 47', 47" des Brückenelements 43 auch aus einem nichtmetallischen Werkstoff, insbesondere Kunststoff oder einem Verbundwerkstoff, insbesondere einem Glas- oder Kohlefaser-verstärktem Kunststoff hergestellt sein.

Unter Berücksichtigung des Werkstoffs und insbesondere dessen Elastizitätsmoduls sowie der jeweiligen Bauteilabmessungen kann die Passung zwischen den Brückenelementen 43, 44 der zumindest einen Knickbrücke so definiert sein, dass ein mechanischer Kontakt zwischen den Brückenelementen 43, 44 der zumindest einen Knickbrücke erst bei Überschreiten einer definierten externen, lateral oder bei einer der nachfolgend beschriebenen Ausführungsformen auch axial auf das fernoptische Gerät 1 einwirkenden Kraft entsteht.

Das Spiel führt dazu, dass beim Knicken des binokularen Fernglases 1 die beiden Brückenelemente der jeweiligen Knickbrücken sich nicht gegenseitig beeinflussen oder gar auf den Knickablauf beziehungsweise das Verschwenken eine Einwirkung haben. Somit wird bei der ersten bevorzugten Ausführungsform die Knickachse des binokularen Fernglases 1 ohne äußere Krafteinwirkung nur durch die beiden anderen, die erste und die zweite Knickbrücke 20, 21, bestimmt und kann diese zumindest eine Knickbrücke funktionell davon getrennt werden.

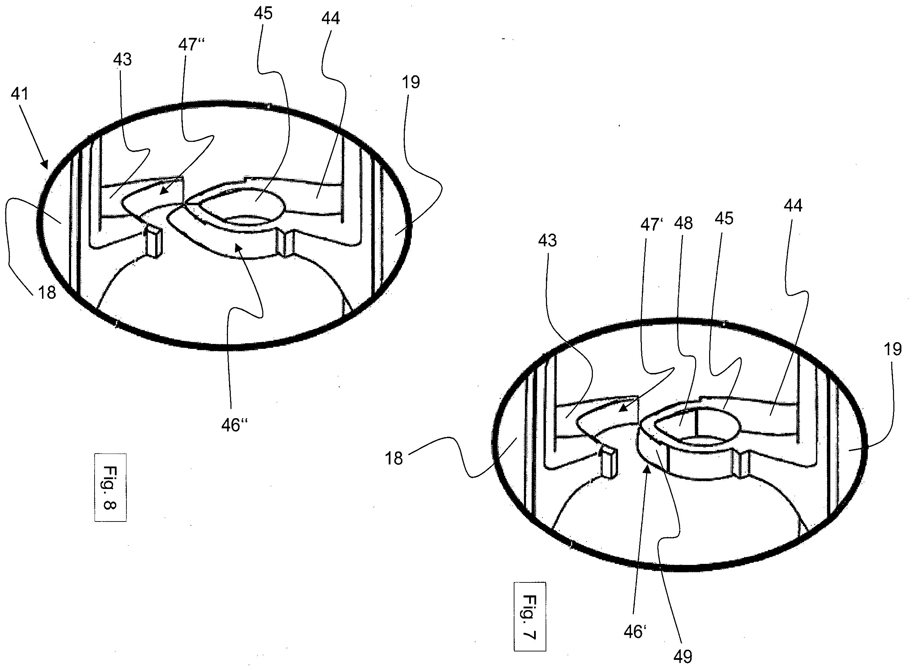

Nachfolgend wir unter Bezugnahme auf Figur 7 eine weitere, zweite bevorzugte erfindungsgemäße Ausführungsform beschrieben.

Bei dieser Ausführungsform der zumindest einen Knickbrücke weisen deren Brückenelemente 43, 44 eine sich in axialer Richtung radial ändernde, ineinander greifende Struktur auf. Der äußere Umfang 46' des Gelenkauges 45 und der offene Umfang 47' ist nicht wie bei der ersten Ausführungsform im Wesentlichen zylinderförmig, sondern jeweils lediglich säulenförmig.

Hierdurch ändert sich beim Knicken oder Verschwenken das Spiel der Passung zwischen den Brückenelementen 43, 44 und kann es während eines Bereichs der Knickung oder Verschwenkung zu einer mechanischen Anlage eines Teils des äußeren Umfangs 46' des Gelenkauges 45 am offenen Umfang 47' des Brückenelements 43 kommen, wodurch definierte Reibkräfte erzeugt werden, welche sowohl eine taktile Rückkopplung für den Benutzer bereitstellen als auch das Binokular in einer oder mehreren Positionen gegen weitere Verdrehung sichern können, beispielsweise in einer Transportposition des Binokulars 1.

Wird zumindest ein Bereich des Gelenkauges 45, welcher in Figur 7 als Abschnitt 48 dargestellt ist, aus einem elastischen Material hergestellt, beispielsweise einem Kunststoff oder Verbundmaterial, so können definierte Reibkräfte und eine sehr definierte taktile Rückkopplung sowie eine äußerst sichere Transportposition erzeugt werden.

Lediglich beispielhaft bei dieser Ausführungsform, aber für alle erfindungsgemäßen Ausführungsformen verwendbar, ist ein Abstandshalter 49 dargestellt, welcher am äußeren Umfang 46' des Gelenkauges 45 angeordnet ist.

Dieser Abstandshalter 49 umfasst ein teilweise reversibel verformbares Material und weist eine definierte radiale Dicke auf. Das teilweise reversibel verformbare Material umfasst einen Elastomer, insbesondere einen synthetischen Kautschuk oder ein Poren umfassendes Gebilde oder besteht vollständig aus einem dieser Werkstoffe.

Im montierten Zustand des Binokulars 1 kann der Abstandshalter 49 bei allen erfindungsgemäßen Ausführungsformen das Spiel der Passung der zumindest einen Knickbrücke vollständig oder auch nur teilweise ausfüllen, wodurch definierte Reibkräfte und stoßdämpfende Rückstellkräfte erzeugt werden können.

Eine nochmals weitere Ausführungsform der Erfindung ist in Figur 8 dargestellt, auf welche nachfolgend Bezug genommen wird.

Die zumindest eine Knickbrücke 41 weist Brückenelemente 43, 44 mit einer sich in axialer Richtung radial ändernden, ineinander greifenden Struktur auf.

Der äußere Umfang 46" des Gelenkauges 45 weist eine radiale, beispielsweise stark tonnenförmige Ausbauchung auf, welche sich im montierten Zustand des Binokulars 1 in eine entsprechende radiale Einwölbung des offenen Umfangs des Brückenelements 43 ragt.

Statt der tonnenförmigen Ausbauchung des äußeren Umfangs 46" kann diese auch dreieck- oder rechteckförmig sein oder auch einer Freiform entsprechend ausgebildet sein, wodurch sich mit der zugeordneten Einwölbung des offenen Umfangs 47" bei einer relativen axialen Verschiebung der Tuben 18, 19 zueinander ein definiertes Zusammenwirken ergibt, welches dieser Verschiebung definierte Rückstellkräfte entgegen setzt.

### Bezugszeichenliste

- 1: Binokulares Fernglas oder Binokular
- 2: Optisches System
- 3: Optisches System
- 4: Objektiv
- 5: Objektiv
- 6: Prismensystem
- 7: Prismensystem
- 8: Okular
- 9: Okular
- 10: Optische Achse des Objektivs 4
- 11: Optische Achse des Objektivs 5
- 12: Optische Achse des Okulars 8
- 13: Optische Achse des Okulars 9
- 14: Linsengruppe, die als Fokussierlinse Bestandteil des Objektivs 4 ist
- 15: Linsengruppe, die als Fokussierlinse Bestandteil des Objektivs 5 ist
- 16: Drehknopf
- 17: Mittellinie des Binokulars
- 18: Tubus
- 19: Tubus
- 20: Brücke oder Knickbrücke
- 21: Brücke oder Knickbrücke
- 22: Pfeil zur Darstellung der Verschwenkung der Knickbrücke
- 23: Pfeil zur Darstellung der Verschwenkung der Knickbrücke
- 24: Augenmuschel
- 25: Augenmuschel
- 26: Haltevorrichtung
- 27: Haltevorrichtung
- 28: Brückenelement der Brücke 20
- 29: Brückenelement der Brücke 20
- 30: Brückenelement der Brücke 21
- 31: Brückenelement der Brücke 22
- 32: Brücke oder Knickbrücke
- 33: Brückenelement der Brücke 32
- 34: Brückenelement der Brücke 32
- 35: Herkömmliche Knickbrücke
- 36: Oberes Gelenkauge im Brückenelement 37
- 37: Brückenelement der herkömmlichen Knickbrücke 35
- 38: Unteres Gelenkauge im Brückenelement 39
- 39: Brückenelement der herkömmlichen Knickbrücke 35
- 40: Erste Knickbrücke der ersten erfindungsgemäßen Ausführungsform
- 41: Zweite Knickbrücke der ersten erfindungsgemäßen Ausführungsform
- 42: Dritte Knickbrücke der ersten erfindungsgemäßen Ausführungsform
- 43: Brückenelement
- 44: Brückenelement
- 45: Gelenkauge des Brückenelements 44
- 46: Äußerer Umfang des Gelenkauges 45
- 46': Äußerer Umfang des Gelenkauges 45
- 46": Äußerer Umfang des Gelenkauges 45
- 47: Offener Umfang des Brückenelements 43
- 47': Offener Umfang des Brückenelements 43
- 47": Offener Umfang des Brückenelements 43
- 48: Abschnitt zumindest im Bereich des Gelenkauges 45
- 49: Abstandshalter

## Patentansprüche

1. Fernoptisches Gerät, mit
zwei Tuben (18, 19) zur Aufnahme fernoptischer Einrichtungen (2, 3),
einer ersten Knickbrücke (20, 40),
einer zweiten Knickbrücke (21, 41),
welche verschwenkbar zwischen den Tuben (18, 19) des fernoptischen Geräts (1) angeordnet sind und
wobei die Knickbrücken (20, 21, 32; 40, 41, 42) jeweils zumindest ein erstes und ein zweites einander zugeordnetes, relativ zueinander verschwenkbares Brückenelement (28, 29, 30, 31, 33, 34, 43, 44) umfassen,
bei welchem zumindest eine Knickbrücke (20, 21, 32; 40, 41, 42) eine Passung aufweist, welche zumindest in Bereichen des Knick- oder Verschwenkbereichs der Brückenelemente (28, 29, 30, 31, 33, 34, 43, 44) ohne äußere Krafteinwirkung einen mechanischen Kontakt der Brückenelemente (43, 44; 28, 29, 30, 31, 33, 34) an einander verhindert,
wobei das eine Brückenelement (44) der zumindest einen Knickbrücke mit einem Gelenkauge (45) geschlossen ausgebildet ist, und
das andere Brückenelement (43) offen gestaltet ist und im Zusammenbau das Gelenkauge (45) des einen Brückenelements (44) umfasst,
wodurch ein Spalt durch die jeweiligen Durchmesser der Umfänge (46) und (47) der Brückenelemente (43) und (44) zwischen dem offenen Umfang (47, 47', 47") des einen Brückenelements (43) und dem äußeren Umfang (46, 46' 46") des Gelenkauges (45) des anderen Brückenelements (44) zwischen den Brückenelementen (43, 44; 28, 29, 30, 31, 33, 34) dieser zumindest einen Knickbrücke (20, 21, 32; 40, 41, 42) definiert wird.

2. Fernoptisches Gerät nach vorstehendem Anspruch, ferner umfassend eine dritte Knickbrücke (32, 42),
wobei die Knickbrücken (20, 21, 32; 40, 41, 42) verschwenkbar zwischen den Tuben (18, 19) des fernoptischen Geräts (1) angeordnet sind und
wobei die Knickbrücken (20, 21, 32; 40, 41, 42) jeweils zumindest ein erstes und ein zweites einander zugeordnetes, relativ zueinander verschwenkbares Brückenelement (28, 29, 30, 31, 33, 34, 43, 44) umfassen,
bei welchem zumindest eine Knickbrücke (20, 21, 32; 40, 41, 42) eine Passung aufweist, welche zumindest in Bereichen des Knick- oder Verschwenkbereichs der Brückenelemente (28, 29, 30, 31, 33, 34, 43, 44) ohne äußere Krafteinwirkung einen mechanischen Kontakt der Brückenelemente (43, 44; 28, 29, 30, 31, 33, 34) an einander verhindert,
wobei das eine Brückenelement (44) der zumindest einen Knickbrücke mit einem Gelenkauge (45) geschlossen ausgebildet ist, und
das andere Brückenelement (43) offen gestaltet ist und im Zusammenbau das Gelenkauge (45) des einen Brückenelements (44) umfasst,
wodurch ein Spalt durch die jeweiligen Durchmesser der Umfänge (46) und (47) der Brückenelemente (43) und (44) zwischen dem offenen Umfang (47, 47', 47") des einen Brückenelements (43) und dem äußeren Umfang (46, 46' 46") des Gelenkauges (45) des anderen Brückenelements (44) zwischen den Brückenelementen (43, 44; 28, 29, 30, 31, 33, 34) dieser zumindest einen Knickbrücke (20, 21, 32; 40, 41, 42) definiert wird.

3. Fernoptisches Gerät nach einem der vorstehenden Ansprüche, **dadurch gekennzeichnet, dass** die Passung einen konstanten Abstand der Brückenelemente (43, 44; 28, 29, 30, 31, 33, 34), insbesondere auch während des Verschwenkens der Brückenelemente (43, 44; 28, 29, 30, 31, 33, 34), relativ zueinander definiert.

4. Fernoptisches Gerät nach einem der vorstehenden Ansprüche, **dadurch gekennzeichnet, dass** der Abstand der Brückenelemente (43, 44; 28, 29, 30, 31, 33, 34) im Bereich von 0,001 mm bis 1,5 mm liegt, vorzugsweise in einem Bereich von 0,01 mm bis 1,3 mm liegt und am bevorzugtesten in einem Bereich von 0,1 mm bis 1,1 mm liegt.

5. Fernoptisches Gerät nach einem der vorstehenden Ansprüche, **dadurch gekennzeichnet, dass** bei der Passung ohne weitere, über das eigene Gewicht des fernoptischen Geräts (1) hinausgehender mechanischer Belastung ein Abstand zwischen den Brückenelementen (43, 44; 28, 29, 30, 31, 33, 34) der zumindest einen Knickbrücke (20, 21, 32; 40, 41, 42) definiert ist, welcher bei Knicken oder Verschwenkung dieser Brückenelemente (43, 44; 28, 29, 30, 31, 33, 34) relativ zueinander im Wesentlichen keine Reibungskräfte zwischen diesen Brückenelementen (43, 44; 28, 29, 30, 31, 33, 34) der zumindest einen Knickbrücke (20, 21, 32; 40, 41, 42) entstehen lässt.

6. Fernoptisches Gerät nach einem der vorstehenden Ansprüche, **dadurch gekennzeichnet, dass** die Passung zwischen den Brückenelementen (43, 44; 28, 29, 30, 31, 33, 34) der zumindest einen Knickbrücke (20, 21, 32; 40, 41, 42) so definiert ist, dass ein mechanischer Kontakt zwischen den Brückenelementen (43, 44; 28, 29, 30, 31, 33, 34) der zumindest einen Knickbrücke (20, 21, 32; 40, 41, 42) erst bei Überschreiten einer definierten externen, lateral oder axial, auf das fernoptische Gerät (1) einwirkenden Kraft entsteht.

7. Fernoptisches Gerät nach einem der vorstehenden Ansprüche, **dadurch gekennzeichnet, dass** zwischen den Brückenelementen (43, 44; 28, 29, 30, 31, 33, 34) der zumindest einen Knickbrücke (20, 21, 32; 40, 41, 42) ein zumindest teilweise reversibel verformbarer Abstandshalter angeordnet ist.

8. Fernoptisches Gerät nach Anspruch 1 und Anspruch 4 bis 7, **dadurch gekennzeichnet, dass** die Brückenelemente (43, 44; 28, 29, 30, 31, 33, 34) der zumindest einen Knickbrücke (20, 21, 32; 40, 41, 42) eine sich über den Verschwenkweg radial ändernde Abmessung (46', 47'; 46", 47") aufweisen und ein von der Schwenkstellung abhängiges Spiel definieren.

9. Fernoptisches Gerät nach einem der vorstehenden Ansprüche, **dadurch gekennzeichnet, dass** die Brückenelemente (43, 44; 28, 29, 30, 31, 33, 34) der zumindest einen Knickbrücke (20, 21, 32; 40, 41, 42) eine sich in axialer Richtung radial ändernde, ineinander greifende Struktur (46', 47'; 46", 47") aufweisen.

10. Fernoptisches Gerät nach einem der vorstehenden Ansprüche 2 bis 9, **dadurch gekennzeichnet, dass** die zumindest eine Knickbrücke (20, 21, 32; 40, 41, 42) die zweite Knickbrücke (32; 41), welche axial zwischen der ersten Knickbrücke (20; 40) und dritten Knickbrücke (21; 42) angeordnet ist, umfasst.

11. Fernoptisches Gerät nach einem der Ansprüche von 2 bis 9, **dadurch gekennzeichnet, dass** die zumindest eine Knickbrücke (20, 21, 32; 40, 41, 42) die erste Knickbrücke (20; 40) und die dritte Knickbrücke (21; 42) umfasst, wobei die erste Knickbrücke (20; 40) axial vor der zweiten Knickbrücke (32; 41) und die dritte Knickbrücke (21; 42) axial hinter der zweiten Knickbrücke (32; 41) angeordnet ist.

12. Fernoptisches Gerät nach einem der vorstehenden Ansprüche, bei welchem die Tuben (18, 19) und/oder Brückenelemente (43, 44; 28, 29, 30, 31, 33, 34) der Knickbrücken (20, 21, 32; 40, 41, 42) aus einem nichtmetallischen Werkstoff, insbesondere Kunststoff oder einem Verbundwerkstoff, insbesondere einem Glas- oder Kohlefaserverstärktem Kunststoff hergestellt sind.

13. Fernoptisches Gerät nach einem der vorstehenden Ansprüche, bei welchem Brückenelemente (43, 44; 28, 29, 30, 31, 33, 34) der Knickbrücken (20, 21, 32; 40, 41, 42) aus einem nichtmetallischen Werkstoff, insbesondere Kunststoff oder einem Verbundwerkstoff, insbesondere einem Glas- oder Kohlefaserverstärktem Kunststoff hergestellt sind.

## Claims

1. A long-range optical device, comprising
two tubes (18, 19) for accommodating long-range optical components (2, 3);
a first folding bridge (20, 40),
a second folding bridge (21, 41),
which are pivotably arranged between the tubes (18, 19) of the long-range optical device (1) and wherein each of the folding bridges (20, 21, 32; 40, 41, 42) comprises at least a first and a second bridge element (28, 29, 30, 31, 33, 34, 43, 44) that are associated with each other and pivotable relative to each other;
wherein at least one folding bridge (20, 21, 32; 40, 41, 42) has a fit which prevents mechanical contact of the bridge elements (43, 44; 28, 29, 30, 31, 33, 34) to each other, at least in sections of the folding or pivoting range of the bridge elements (28, 29, 30, 31, 33, 34, 43, 44) in the absence of an external force;
wherein the one bridge element (44) of the at least one folding bridge has a closed shape with a hinge eye (45), and
the other bridge element (43) has an open shape and encompasses the hinge eye (45) of the one bridge element (44) when assembled;
whereby a gap is defined by the respective diameters of the perimeters (46) and (47) of the bridge elements (43) and (44) between the open perimeter (47, 47', 47") of the one bridge element (43) and the outer perimeter (46, 46', 46") of the hinge eye (45) of the other bridge element (44), between the bridge elements (43, 44; 28, 29, 30, 31, 33, 34) of said at least one folding bridge (20, 21, 32; 40, 41, 42).

2. The long-range optical device according to the preceding claim, further comprising a third folding bridge (32, 42);
wherein the folding bridges (20, 21, 32; 40, 41, 42) are pivotably arranged between the tubes (18, 19) of the long-range optical device (1); and
wherein each of the folding bridges (20, 21, 32; 40, 41, 42) comprises at least a first and a second bridge element (28, 29, 30, 31, 33, 34, 43, 44) that are associated with each other and pivotable relative to each other;
of which at least one folding bridge (20, 21, 32; 40, 41, 42) has a fit which prevents mechanical contact of the bridge elements (43, 44; 28, 29, 30, 31, 33, 34) to each other, at least in sections of the folding or pivoting range of the bridge elements (28, 29, 30, 31, 33, 34, 43, 44) in the absence of an external force;
wherein the one bridge element (44) of the at least one folding bridge has a closed shape with a hinge eye (45), and
the other bridge element (43) has an open shape and encompasses the hinge eye (45) of the one bridge element (44) when assembled;
whereby a gap is defined by the respective diameters of the perimeters (46) and (47) of the bridge elements (43) and (44) between the open perimeter (47, 47', 47") of the one bridge element (43) and the outer perimeter (46, 46', 46") of the hinge eye (45) of the other bridge element (44), between the bridge elements (43, 44; 28, 29, 30, 31, 33, 34) of said at least one folding bridge (20, 21, 32; 40, 41, 42).

3. The iong-range optical device according to any one of the preceding claims, **characterised in that** the fit defines a constant spacing of the bridge elements (43, 44; 28, 29, 30, 31, 33, 34), in particular also during the pivoting movement of the bridge elements (43, 44; 28, 29, 30, 31, 33, 34) relative to each other.

4. The long-range optical device according to any one of the preceding claims, **characterised in that** the spacing of the bridge elements (43, 44; 28, 29, 30, 31, 33, 34) is in a range from 0.001 mm to 1.5 mm, preferably in a range from 0.01 mm to 1.3 mm, and most preferably in a range from 0.1 mm to 1.1 mm.

5. The long-range optical device according to any one of the preceding claims, **characterised in that** without a further mechanical load apart from the own weight of the long-range optical device (1), the fit defines a spacing between the bridge elements (43, 44; 28, 29, 30, 31, 33, 34) of the at least one folding bridge (20, 21, 32; 40, 41, 42) which upon a folding or pivoting movement of said bridge elements (43, 44; 28, 29, 30, 31, 33, 34) relative to each other substantially prevents frictional forces from being produced between said bridge elements (43, 44; 28, 29, 30, 31, 33, 34) of the at least one folding bridge (20, 21, 32; 40, 41, 42).

6. The long-range optical device according to any one of the preceding claims, **characterised in that** the fit between the bridge elements (43, 44; 28, 29, 30, 31, 33, 34) of the at least one folding bridge (20, 21, 32; 40, 41, 42) is defined such that a mechanical contact between the bridge elements (43, 44; 28, 29, 30, 31, 33, 34) of the at least one folding bridge (20, 21, 32; 40, 41, 42) does not occur unless a predefined external force is exceeded that acts laterally or axially on the long-range optical device (1).

7. The long-range optical device according to any one of the preceding claims, **characterised in that** a spacer is arranged between the bridge elements (43, 44; 28, 29, 30, 31, 33, 34) of the at least one folding bridge (20, 21, 32; 40, 41, 42), which is reversibly deformable, at least partially.

8. The long-range optical device according to claim 1 and claim 4 to 7, **characterised in that** the bridge elements (43, 44; 28, 29, 30, 31, 33, 34) of the at least one folding bridge (20, 21, 32; 40, 41, 42) have a radial dimension (46', 47', 46", 47") that is varying over the pivoting range and define a clearance as a function of the pivoting position.

9. The long-range optical device according to any one of the preceding claims, **characterised in that** the bridge elements (43, 44; 28, 29, 30, 31, 33, 34) of the at least one folding bridge (20, 21, 32; 40, 41, 42) have an interengaging structure (46', 47'; 46", 47") that is radially varying in an axial direction.

10. The long-range optical device according to any one of the preceding claims 2 to 9, **characterised in that** the at feast one folding bridge (20, 21, 32; 40, 41, 42) comprises the second folding bridge (32; 41) which is arranged axially between the first folding bridge (20; 40) and the third folding bridge (21; 42).

11. The long-range optical device according to any one of claims 2 to 9, **characterised in that** the at least one folding bridge (20, 21, 32; 40, 41, 42) comprises the first folding bridge (20; 40) and the third folding bridge (21; 42), wherein the first folding bridge (20; 40) is arranged axially in front of the second folding bridge (32; 41) and the third folding bridge (21; 42) axially behind the second folding bridge (32; 41).

12. The long-range optical device according to any one of the preceding claims, wherein the tubes (18, 19) and/or the bridge elements (43, 44; 28, 29, 30,31, 33, 34) of the folding bridges (20, 21, 32; 40, 41, 42) are made of a non-metallic material, in particular a plastic or a composite material, in particular a glass reinforced or carbon fibre reinforced plastic material.

13. The long-range optical device according to any one of the preceding claims, wherein bridge elements (43, 44; 28, 29, 30, 31, 33, 34) of the folding bridges (20, 21, 32; 40, 41, 42) are made of a non-metallic material, in particular a plastic or a composite material, in particular a glass reinforced or carbon fibre reinforced plastic material.

## Revendications

1. Appareil de téléoptique, comprenant :
deux tubes (18, 19) destinés à loger des dispositifs téléoptiques (2, 3),
un premier pont articulé (20, 40),
un deuxième pont articulé (21, 41),
lesquels sont agencés de manière à pouvoir pivoter entre les tubes (18, 19) de l'appareil de téléoptique (1) et
dans lequel les ponts articulés (20, 21, 32 ; 40, 41, 42) comprennent chacun au moins un premier et un deuxième élément de pont (28, 29, 30, 31, 33, 34, 43, 44) associés l'un à l'autre et pouvant pivoter l'un par rapport à l'autre,
selon lequel au moins un pont articulé (20, 21, 32 ; 40, 41, 42) présente un ajustement, lequel empêche un contact mécanique des éléments de pont (43, 44 ; 28, 29, 30, 31, 33, 34) l'un contre l'autre au moins dans des régions de la zone d'articulation ou de pivotement des éléments de pont (28, 29, 30, 31, 33, 34, 43, 44) sans l'exercice d'une force extérieure,
dans lequel l'un des éléments de pont (44) de l'au moins un pont articulé est fermé au moyen d'un oeillet d'articulation (45), et
l'autre élément de pont (43) est ouvert et entoure l'oeillet d'articulation (45) de l'un des éléments de pont (44) dans l'état assemblé,
ce qui a pour effet qu'une fente est définie par le diamètre respectif des pourtours (46) et (47) des éléments de pont (43) et (44) entre le pourtour ouvert (47, 47', 47") de l'un des éléments de pont (43) et le pourtour extérieur (46, 46', 46") de l'oeillet d'articulation (45) de l'autre élément de pont (44) entre les éléments de pont (43, 44; 28, 29, 30, 31, 33, 34) dudit au moins un pont articulé (20, 21, 32 ; 40, 41, 42).

2. Appareil de téléoptique selon la revendication précédente, comprenant en outre un troisième pont articulé (32, 42),
dans lequel les ponts articulés (20, 21, 32 ; 40, 41, 42) sont agencés de manière à pouvoir pivoter entre les tubes (18, 19) de l'appareil de téléoptique (1) et
dans lequel les ponts articulés (20, 21, 32 ; 40, 41, 42) comprennent chacun au moins un premier et un deuxième élément de pont (28, 29, 30, 31, 33, 34, 43, 44) associés l'un à l'autre et pouvant pivoter l'un par rapport à l'autre,
selon lequel au moins un pont articulé (20, 21, 32; 40, 41, 42) présente un ajustement, lequel empêche un contact mécanique des éléments de pont (43, 44 ; 28, 29, 30, 31, 33, 34) l'un contre l'autre au moins dans des régions de la zone d'articulation ou de pivotement des éléments de pont (28, 29, 30, 31, 33, 34, 43, 44) sans l'exercice d'une force extérieure,
dans lequel l'un des éléments de pont (44) de l'au moins un pont articulé est fermé au moyen d'un oeillet d'articulation (45), et
l'autre élément de pont (43) est ouvert et entoure l'oeillet d'articulation (45) de l'un des éléments de pont (44) dans l'état assemblé,
ce qui a pour effet qu'une fente est définie par le diamètre respectif des pourtours (46) et (47) des éléments de pont (43) et (44) entre le pourtour ouvert (47, 47', 47") de l'un des éléments de pont (43) et le pourtour extérieur (46, 46', 46") de l'oeillet d'articulation (45) de l'autre élément de pont (44) entre les éléments de pont (43, 44 ; 28, 29, 30, 31, 33, 34) dudit au moins un pont articulé (20, 21, 32 ; 40, 41, 42).

3. Appareil de téléoptique selon l'une quelconque des revendications précédentes, **caractérisé en ce que** l'ajustement définit un, écart constant entre les éléments de pont (43, 44 ; 28, 29, 30, 31, 33, 34), en particulier également pendant le pivotement des éléments de pont (43, 44 ; 28, 29, 30, 31, 33, 34) l'un par rapport à l'autre.

4. Appareil de téléoptique selon l'une quelconque des revendications précédentes, **caractérisé en ce que** l'écart entre les éléments de pont (43, 44 ; 28, 29, 30, 31, 33, 34) se situe dans la plage de 0,001 mm à 1,5 mm, de préférence dans une plage de 0,01 mm à 1,3 mm et idéalement dans une plage de 0,1 mm à 1,1 mm.

5. Appareil de téléoptique selon l'une quelconque des revendications précédentes, **caractérisé en ce que**, pour l'ajustement, sans contrainte mécanique supplémentaire allant au-delà du poids propre de l'appareil de téléoptique (1), un écart entre les éléments de pont (43, 44 ; 28, 29, 30, 31, 33, 34) de l'au moins un pont articulé (20, 21, 32 ; 40, 41, 42) est défini, lequel, lors de l'articulation ou du pivotement de ces éléments de pont (43, 44 ; 28, 29, 30, 31, 33, 34) l'un par rapport à l'autre, ne laisse se produire sensiblement aucune force de frottement entre ces éléments de pont (43, 44; 28, 29, 30, 31, 33, 34) de l'au moins un pont articulé (20, 21, 32 ; 40, 41, 42).

6. Appareil de téléoptique selon l'une quelconque des revendications précédentes, **caractérisé en ce que** l'ajustement entre les éléments de pont (43, 44; 28, 29, 30, 31, 33, 34) de l'au moins un pont articulé (20, 21, 32 ; 40, 41, 42) est défini de telle sorte qu'un contact mécanique entre les éléments de pont (43, 44 ; 28, 29, 30, 31, 33, 34) de l'au moins un pont articulé (20, 21, 32 ; 40, 41, 42) n'est produit que lorsqu'une force externe définie agissant latéralement ou axialement sur l'appareil de téléoptique (1) est dépassée.

7. Appareil de téléoptique selon l'une quelconque des revendications précédentes, **caractérisé en ce qu'**une entretoise au moins en partie déformable de manière réversible est agencée entre les éléments de pont (43, 44 ; 28, 29, 30, 31, 33, 34) de l'au moins un pont articulé (20, 21, 32 ; 40, 41, 42).

8. Appareil de téléoptique selon la revendication 1 et les revendications 4 à 7, **caractérisé en ce que** les éléments de pont (43, 44 ; 28, 29, 30, 31, 33, 34) de l'au moins un pont articulé (20, 21, 32 ; 40, 41, 42) présentent une dimension (46', 47' ; 46", 47") variant radialement sur toute l'étendue de la course de pivotement et définissent un jeu dépendant de la position de pivotement.

9. Appareil de téléoptique selon l'une quelconque des revendications précédentes, **caractérisé en ce que** les éléments de pont (43, 44; 28, 29, 30, 31, 33, 34) de l'au moins un pont articulé (20, 21, 32 ; 40, 41, 42) présentent une structure (46', 47' ; 46", 47") variant radialement dans la direction axiale, lesquelles structures s'imbriquent.

10. Appareil de téléoptique selon l'une quelconque des revendications 2 à 9 précédentes, **caractérisé en ce que** l'au moins un pont articulé (20, 21, 32; 40, 41, 42) englobe le deuxième pont articulé (32 ; 41), lequel est agencé axialement entre le premier pont articulé (20 ; 40) et le troisième pont articulé (21 ; 42).

11. Appareil de téléoptique selon l'une quelconque des revendications 2 à 9, **caractérisé en ce que** l'au moins un pont articulé (20, 21, 32; 40, 41, 42) englobe le premier pont articulé (20; 40) et le troisième pont articulé (21 ; 42) , dans lequel le premier pont articulé (20 ; 40) est agencé axialement devant le deuxième pont articulé (32 ; 41) et le troisième pont articulé (21; 42) est agencé axialement derrière le deuxième pont articulé (32 ; 41).

12. Appareil de téléoptique selon l'une quelconque des revendications précédentes, pour lequel les tubes (18, 19) et/ou les éléments de pont (43, 44 ; 28, 29, 30, 31, 33, 34) des ponts articulés (20, 21, 32; 40, 41, 42) sont fabriqués à partir d'un matériau non métallique, en particulier une matière plastique ou un matériau composite, en particulier une matière plastique renforcée par des fibres de verre ou de carbone.

13. Appareil de téléoptique selon l'une quelconque des revendications précédentes, pour lequel les éléments de pont (43, 44 ; 28, 29, 30, 31, 33, 34) des ponts articulés (20, 21, 32 ; 40, 41, 42) sont fabriqués à partir d'un matériau non métallique, en particulier une matière plastique ou un matériau composite, en particulier une matière plastique renforcée par des fibres de verre ou de carbone.
